# EUROPEAN PATENT APPLICATION

(11) **EP 4 461 174 A1**
(43) Date of publication of application: **13.11.2024**
(21) Application number: 23172882.5
(22) Date of filing: 11.05.2023
(51) Int. Cl.: A47J 37/06

(54) **AIR FRYER FOOD SUPPORT**

(71) Applicant: Versuni Holding B.V., 5656 AE Eindhoven (NL)
(72) Inventor: FLOESSHOLZER, Hannes Uwe, 5656 AE Eindhoven (NL)
(74) Representative: Vollering, Stefanus Franciscus Maria

(57) **Abstract**

Provided is an air fryer accessory. The air fryer accessory comprises a fluid permeable food support (110) for supporting food thereon at least when the food is inside an air fryer's cooking chamber (102). The food support comprises a central portion (114) for shielding food supported on the central portion from heated air beneath the central portion. The food support also comprises a peripheral portion (116). The peripheral portion surrounds the central portion, with the heated air being deliverable through the food support to reach food supported on the food support mainly or exclusively via the peripheral portion. Further provided is an air fryer (100) comprising the cooking chamber, a heating element, a circulation system and the air fryer accessory.

## Description

### FIELD OF THE INVENTION

This invention relates to an air fryer food support for supporting food in an air fryer's cooking chamber.

### BACKGROUND OF THE INVENTION

Air fryers are already common kitchen appliances but their popularity continues to grow. Air fryers may, for example, take the form of portable ovens which are designed to fit on a kitchen work surface.

Air fryers can be distinguished from, for example, convection ovens at least partly by the direction of air circulation through the cooking chamber. The air fryer's cooking chamber has, when orientated for use, a top and a bottom. A circulation system, e.g. in the form of a fan driven by a motor, is arranged to circulate air upwardly through food received in the cooking chamber in the direction of the top and/or downwardly through food received in the cooking chamber in the direction of the bottom.

By, for instance, mounting the air fryer's heating element proximal to the top of cooking chamber, air having passed upwardly through the food can be reheated by the heating element before being passed around a duct and being introduced back into the food at the bottom.

Such an arrangement has various advantages, particularly in terms of the frying effect which can be achieved with no or only a relatively small amount of cooking oil being required.

As well as this frying effect, various modifications have been proposed to enable air fryers to cook a more diverse range of foods and to achieve different cooking results.

In particular, accessories for baking dough-comprising items, such as pizzas, in the air fryer's cooking chamber have been introduced. Various challenges have nonetheless been encountered with such accessories. One issue is that the bottom of pizza supported by such an accessory may lack crispiness due to receiving insufficient heat during baking in the air fryer, particularly when the pizza dough has not been pre-baked, e.g. as in the case of homemade pizza. This may be due to the pizza's relatively large area spanning a significant fraction of the cooking chamber, and thus blocking almost all of the airflow provided by the circulation system. The main airflow may therefore merely contact the upper side of the pizza, at which the pizza's toppings are provided, and then return to the circulation system. Only a small amount of air, for instance turbulent air sporadically thrown underneath the pizza, may pass around the pizza in order to heat the bottom of the pizza. This may be via relatively small gaps between the pizza and corners of the cooking chamber. The lack of constant airflow passing underneath the pizza may result in relatively inefficient heating of the bottom of the pizza.

A further issue is that the direction of airflow through the cooking chamber can lead to a compromised baking result even when a dedicated accessory, e.g. food support, is employed for baking such dough-comprising items.

### SUMMARY OF THE INVENTION

The invention is defined by the claims.

According to examples in accordance with an aspect of the invention, there is provided an air fryer comprising: a cooking chamber; a heating element; a circulation system for circulating air heated by the heating element in the cooking chamber; a fluid permeable food support for supporting food thereon in the cooking chamber; and one or more flow channels extending beneath the food support and into which air heated by the heating element is deliverable by the circulation system, wherein the food support comprises: a central portion at a center of the food support and arranged to extend from the center over the one or more flow channels to shield food supported on the central portion from the heated air in the one or more flow channels; and a peripheral portion on which food is supportable, the peripheral portion surrounding the central portion and having a larger open area than that of the central portion.

Whilst the flow channel(s) extending beneath the food support may facilitate upward and/or downward airflow in the air fryer's cooking chamber, this airflow can lead to a compromised baking result. In particular, a central region of dough supported in the cooking chamber may be caused to dome/bulge during baking, and holes may even be formed in the central region of the dough.

The present invention is partly based on the realization that arranging a relatively low permeability or impermeable central portion of the food support over the flow channel(s) can assist to minimize the risk of upwards doming/bulging of, and hole formation in, the central region of the dough.

The heated air can still reach the dough by passing through the food support primarily or exclusively via a peripheral portion surrounding the central portion, since the open area of the peripheral portion is larger than that of the central portion. Heated air accessing the dough peripherally in this way may nonetheless entail less risk of such doming/bulging of, and hole formation in, the dough.

It is noted that the open area is a ratio known in the art that indicates how much of the area of a plate or sheet is occupied by holes, expressed as a percentage. For example, if the open area of the central portion is 10%, it means that 10% of the central portion is holes and 90% of the central portion is material, e.g. metal-comprising material.

The central portion is at a center, in other words at a centroid of the food support when viewed in plan.

The central portion extends outwardly from the center to an inner boundary defined between the central portion and the peripheral portion. The central portion is accordingly delimited by this inner boundary, with the peripheral portion being defined between the inner boundary and an outer boundary.

In some embodiments, aperture(s) in the central portion each have a maximum dimension of at most 3 mm.

This can avoid or at least assist to minimize the risk of excessive hanging of dough through the central portion, and thereby enhance the baking result achievable using the air fryer.

Should more than one aperture be delimited by the central portion, closest edges of nearest neighbor apertures may be spaced from each other by at least 3 mm, for example at least 4 mm, e.g. by about 5 mm.

The open area of the central portion may be 0 to 10%.

This may assist to minimize airflow through the central portion.

In some embodiments, the central portion has an open area of 0%. In such embodiments, no aperture is delimited by the central portion, e.g. no such aperture is delimited by metallic material forming the food support in the central portion.

Thus, the central portion may block heated air underneath the central portion from passing through the central portion to reach food supported on the central portion. Moreover, hanging of dough through the central portion may be alleviated, with concomitant enhancement of the baking result achievable using the air fryer.

Alternatively, the central portion may have an open area that is greater than 0% but less than or equal to 10%. In other words, the central portion may be permeable, although airflow therethrough may be minimized due to the open area of the central portion being limited to a maximum of 10%.

In some embodiments, the central portion spans at least 10% of a total area of the food support. Such a minimum area for the central portion has been found to be particularly effective in minimizing the risk of doming/bulging of, and hole formation in, the central region of the dough.

In such embodiments, the peripheral portion may span at most 90% of the total area of the food support.

Alternatively or additionally, the central portion may have a minimum dimension of at least 5 cm, preferably at least 8 cm, with the minimum dimension extending across the center of the food support from a first point on the inner boundary that delimits the central portion to an opposing second point on the inner boundary.

Such a minimum dimension for the central portion has been found to be particularly effective in minimizing the risk of doming/bulging of, and hole formation in, the central region of the dough.

In some embodiments, e.g. in combination with the above-mentioned minimum area and/or minimum dimension of the central portion, the central portion spans at most 30% of the total area of the food support.

The 30% maximum area for the central portion may assist to ensure that sufficient airflow reaches the food, primarily or exclusively via the peripheral portion.

In such embodiments, the peripheral portion may span at least 70% of the total area of the food support.

In some embodiments, the open area of the peripheral portion is at least 30%. Such a minimum open area of the peripheral portion can facilitate airflow therethrough to reach the food supported on the food support.

In some embodiments, the one or more flow channels comprise neighboring flow channels separated from each other by a dividing rib. In such embodiments, the central portion may be arranged to extend over the dividing rib and the neighboring flow channels.

In this case, the central portion may comprise, e.g. be in the form of, an apertureless plate portion disposed over the flow channels and dividing rib(s).

In some embodiments, the air fryer comprises an air guide member beneath the food support and configured to guide the heated air towards the food support, with the one or more flow channels being at least partly defined by the air guide member.

The air guide member may, for example, comprise a so-called star-fish shape. The star-fish shape comprises a plurality of radial dividing ribs that separate neighboring flow channels from each other.

In some embodiments, the central portion is arranged or arrangeable over a central area of the air guide member, for example with the central portion spanning at most 30% of the total area of the food support.

In this way, the central portion can assist to shield the central region of dough supported on the central portion from relatively forceful airflows directed from the central area of the air guide member.

It is noted that the central area of the air guide member may be aligned with an inlet area of a fan included in the circulation system through which inlet area air is axially drawn from the cooking chamber and into the fan.

In some embodiments, a single flow channel is provided. In such embodiments, the single flow channel may be defined by a space between a bottom of the cooking chamber, e.g. a flat base portion of the cooking chamber wall, and an underside of the food support.

It is noted that the above-mentioned flat base portion of the cooking chamber wall may mean that no air guide member, e.g. star-fish shaped air guide member, may be provided on the base portion of the cooking chamber wall beneath the food support.

In some embodiments, the air fryer comprises a handle for coupling to the food support, with the handle assisting movement of the food support into and out of the cooking chamber.

In such embodiments, the food support may be supportable via the handle above the one or more flow channels.

In some embodiments, a sidewall upstands away from and extends around only a fraction of an outer edge of the food support. Such a sidewall can assist to provide a controlled, e.g. uniform, heated airflow to the food supported on the food support, with concomitant enhancement of the cooking/baking result.

In some embodiments, the sidewall upstands away from the outer edge of the food support at an angle such that the sidewall extends inwardly towards the central portion of the food support. Such angling of the sidewall can further assist to control heated airflow to the food supported on the food support.

In some embodiments, the air fryer comprises a further food support for supporting food thereon in the cooking chamber, with the further food support being arranged or arrangeable above the food support in the cooking chamber. This may facilitate cooking, e.g. baking, of more food in the cooking chamber.

In some embodiments, the further food support comprises: a further central portion arranged to shield food supported on the further central portion from heated air between the food support and the further food support; and a further peripheral portion on which food is supportable, with the further peripheral portion surrounding the further central portion and having a larger open area than that of the further central portion.

The further central portion can assist to minimize the risk of upwards doming/bulging of, and hole formation in, a central region of dough supported on the further food support. The heated air can still reach the dough via the further peripheral portion surrounding the further central portion but with less risk of doming/bulging of, and hole formation in, the dough.

An open area of the further central portion may be 0 to 10%. This may assist to minimize airflow through the further central portion.

In some embodiments, the further central portion has an open area of 0%. In other words, the further central portion may be impermeable so as to block heated air underneath the further central portion from passing through the further central portion to reach food supported on the further central portion.

Alternatively, the further central portion may have an open area that is greater than 0% but less than or equal to 10%. In other words, the further central portion may be permeable, although airflow therethrough may be minimized due to the open area of the further central portion being limited to a maximum of 10%.

In some embodiments, aperture(s) delimited by the further central portion each have a maximum dimension of at most 3 mm.

This can avoid or at least assist to minimize the risk of excessive hanging of dough through the further central portion. This can assist to enhance the baking result achievable using the air fryer.

Alternatively or additionally to aperture(s) delimited by the further central portion each having the maximum dimension of at most 3 mm, and should more than one aperture be delimited by the further central portion, closest edges of nearest neighbor apertures of the further central portion may be spaced from each other by at least 3 mm, for example at least 4 mm, e.g. by about 5 mm.

In some embodiments, the central portion of the food support and the further central portion of the further food support are aligned with each other so that the further central portion extends over, e.g. eclipses, the central portion.

In some embodiments, a further sidewall upstands away from and extending around only a fraction of a further outer edge of the further food support. The further sidewall can assist to provide a controlled, e.g. uniform, heated airflow to the food supported on the further food support, with concomitant enhancement of the cooking/baking result.

In embodiments in which the sidewall and the further sidewall are included, the fraction of the outer edge along which the sidewall extends may align with a remainder of the further outer edge along which the further sidewall does not extend. Alternatively or additionally, opposing regions of the sidewall and the further sidewall may face each other across the further food support.

In this way, both the sidewall and the further sidewall can cooperate with each other to control the heated airflow through the cooking chamber.

In some embodiments, the sidewall and the further sidewall can be mutually arranged such that heated air is guided across the food support in a first direction towards the sidewall and then across the further food support in a second direction, e.g. opposite to the first direction, towards the further sidewall.

In some embodiments, a cover member is arranged or arrangeable between the heating element and the food support, with one or more flow paths being provided for the heated air through and/or past the cover member. The cover member can assist to lessen the risk of food being blown by the airflow against the heating element. In some embodiments, the cover member can comprise, e.g. be in the form of a perforate cover, such as a mesh.

In some embodiments, the cover member is arranged or arrangeable between the heating element and the food support such that radiation from the heating element is incident on a heat shielding portion of the cover member. In such embodiments, food supported by the food support and/or the further food support (when present) may be shielded from radiation from the heating element.

This can assist to minimize the risk of burning of food. This may be particularly beneficial in embodiments in which the further food support is included, since the further food support may be arranged or arrangeable closer to the heating element, proximal to a top of the cooking chamber, than the food support.

In particularly preferred embodiments, the cover member comprises the heat shielding portion and this heat shielding portion delimits a central opening that defines a flow path directed toward the inlet area of the fan.

Such a central opening delimited by the heat shielding portion may align with the inlet area of the fan when the food support, the cover member, and optionally the further food support, are received in the cooking chamber.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 schematically depicts an air fryer according to an example;
FIG. 2 shows part of an air fryer according to another example;
FIGs. 3A and 3B provide plan views of an air guide member and a food support according to an example, respectively;
FIGs. 4A and 4B provide plan views of an air guide member and a food support according to another example, respectively;
FIG. 5A provides a plan view of a food support according to a yet another example;
FIG. 5B provides an enlarged perspective view of a central portion of the food support shown in FIG. 5A;
FIG. 6 provides a schematic plan view of a food support according to a further example;
FIG. 7 schematically depicts part of an air fryer according to yet another example;
FIG. 8 schematically depicts a food support and a further food support according to a first example;
FIG. 9 provides a perspective view of a food support and a further food support according to a second example;
FIGs. 10A and 10B provide views of part of an air fryer comprising the food support and the further food support shown in FIG. 9;
FIG. 11 schematically depicts a food support and a further food support according to a third example;
FIGs. 12A and 12B provide views of a food support and a further food support according to a fourth example, with a pizza being supported on each of the food support and the further food support;
FIG. 13 schematically depicts a food support and a further food support according to a fifth example;
FIG. 14 provides a perspective view of a food support and a further food support according to a sixth example, with a pizza being supported on each of the food support and the further food support;
FIG. 15 schematically depicts a food support and a further food support according to a seventh example; and
FIG. 16 provides a perspective view of a food support and a further food support according to an eighth example.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is an air fryer accessory. The air fryer accessory comprises a fluid permeable food support for supporting food thereon at least when the food is inside an air fryer's cooking chamber. The food support comprises a central portion for shielding food supported on the central portion from heated air beneath the central portion. The food support also comprises a peripheral portion. The peripheral portion surrounds the central portion, with the heated air being deliverable through the food support to reach food supported on the food support mainly or exclusively via the peripheral portion. Further provided is an air fryer comprising the cooking chamber, a heating element, a circulation system and the air fryer accessory.

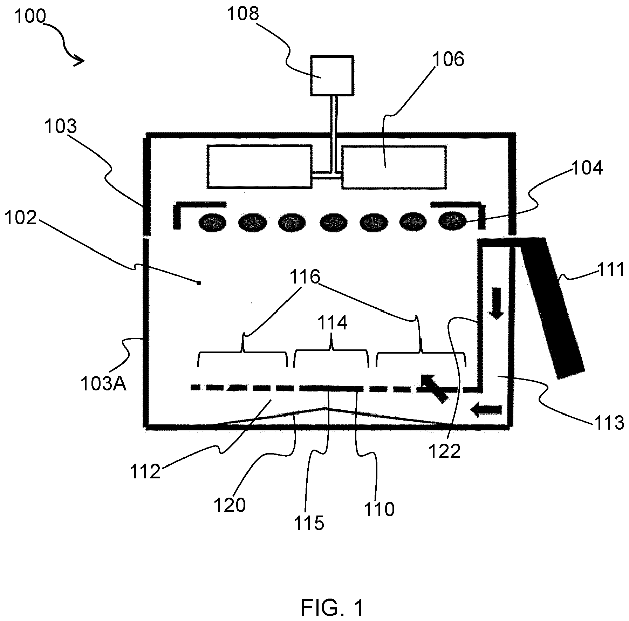

FIG. 1 schematically depicts an air fryer 100 according to an example. The air fryer 100 has a cooking chamber 102 that is at least partly delimited by a cooking chamber wall 103.

The air fryer 100 may include a casing (not visible in the Figures), for example a plastic casing, in which at least part of the cooking chamber wall 103 is arranged.

The air fryer 100 includes a heating element 104 and a circulation system 106, 108 for circulating air heated by the heating element 104 in the cooking chamber 102.

In some embodiments, such as shown in FIG. 1, the heating element 104 is arranged to irradiate food (not visible in FIG. 1) received in the cooking chamber 102, as well as heating air that is circulated by the circulation system 106, 108.

The heating element 104 can have any suitable design. In some embodiments, the heating element 104 comprises, e.g. is defined by, a resistive heating element 104. Particular mention is made of a spiral resistive heating element 104 being included in the heating element 104. Air can, for example, be circulated by the circulation system 106, 108 through space(s) between coils of such a spiral resistive heating element 104 in order to heat the air. Such coils are schematically depicted in FIG. 1.

In at least some embodiments, the circulation system 106, 108 comprises a fan 106 and a motor 108, with rotation of the fan 106 by the motor 108 causing the circulating of air.

A fluid permeable food support 110 supports food thereon in the cooking chamber 102. The food support 110 can be formed of any suitable material. In some embodiments, the food support 100 comprises a metallic material, in other words a metal or a metal alloy. Such a metallic material is preferably coated with a non-stick coating, such as a fluoropolymer coating. In other embodiments, the food support 110 comprises, e.g. is formed from, a heat resistant polymer, such as silicone.

In some embodiments, such as shown in FIG. 1, the air fryer 100 comprises a drawer 103A that is slidable to provide access to the cooking chamber 102, with the food support 110 being included or arrangeable in the drawer 103A.

The drawer 103A may be mounted in any suitable manner that enables the drawer 103A to slide, e.g. relative to the rest of the air fryer 100, to provide access to the cooking chamber 102 and to (re-)close the cooking chamber 102. In some embodiments, the drawer 103A is mounted on rails, with sliding of the drawer 103A on the rails in a first direction enabling the cooking chamber 102 to be accessed and sliding of the drawer 103A on the rails in a section direction opposite to the first direction enabling the cooking chamber 102 to be closed.

It is noted that the cooking chamber 102 may be accessed in other ways, such as via a moveable lid (not visible in the Figures) that can be moved, e.g. by lifting, to enable the cooking chamber 102 to be accessed. Such a moveable lid may, for example, be pivotally mounted so that pivoting of the lid enables the cooking chamber 102 to be accessed.

The food support 110 can be arranged, e.g. mounted, in the cooking chamber 102 in any suitable manner. In some embodiments, such as shown in FIG. 1, a handle 111 is coupled or couplable to the food support 110, with the handle 111 assisting movement of the food support 110 into and out of the cooking chamber 102.

As well as enabling lifting and lowering of the food support 110, the handle 111 may additionally assist the user, via lateral pulling or pushing of the handle 111, to slide the drawer 103A to access or (re-)close the cooking chamber 102.

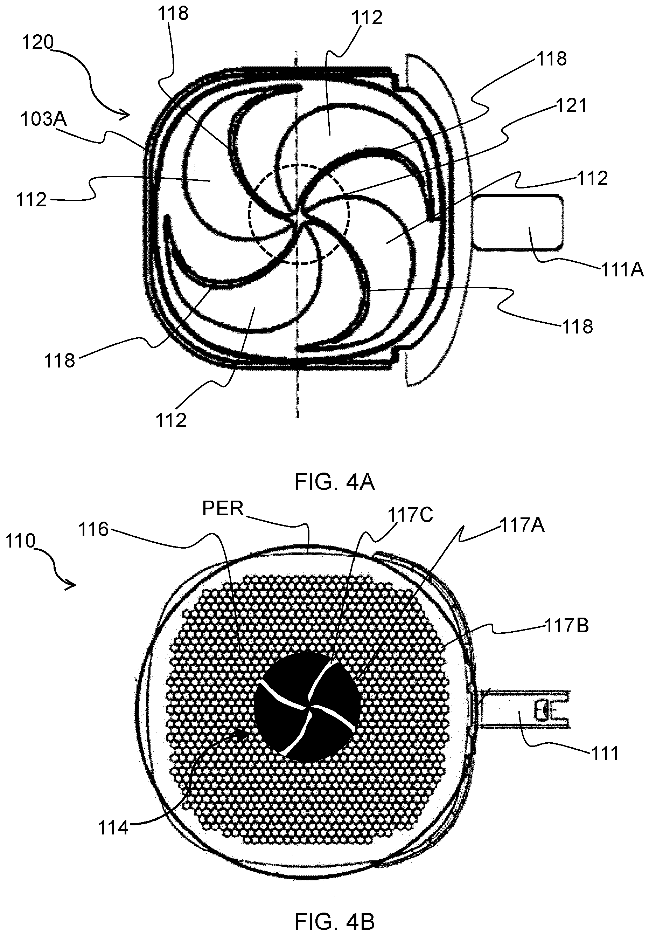

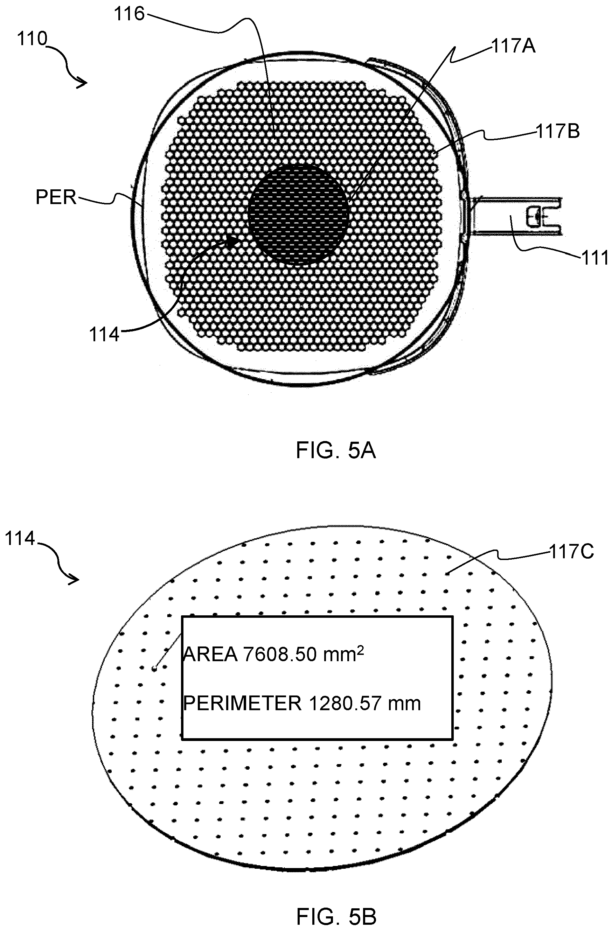

To this end, and referring to FIGs. 4A and 5A, a handle support 111A may be included in the drawer 103A, with the handle 111 and the handle support 111A being cooperable with each other to enable sliding of the drawer 103A by lateral pulling or pushing the handle 111 when the handle 111 and the handle support 111A are cooperating with each other.

More generally, and irrespective of inclusion or otherwise of such a handle 111, the food support 110 may be removable from the cooking chamber 102.

Such removability may assist loading or unloading of food onto or from the food support 110, and can also assist with cleaning the food support 110 and the cooking chamber 102. Alternatively or additionally, removal of the food support 110 from the cooking chamber 102 may enable another type of food support 110 to be arranged in the cooking chamber 102, e.g. for cooking a different type of food and/or for implementing a different type of cooking.

It is noted that the food support 110 can be supplied separately from the rest of the air fryer 100. The food support 110 may be included in an air fryer accessory that is suitable for an air fryer 100, which air fryer 100 comprises a cooking chamber 102 in which the food support 110 is receivable, a heating element 104, and a circulation system 106, 108.

It is also noted that the food support 110 can be used to support various different types of food thereon, such as fish, chicken, flammkuchen, etc. Pizza is used herein as a representative example for such food, which may be too large to fit into a conventional air fryer basket.

Referring again to FIG. 1, one or more flow channels 112 extend(s) beneath the food support 110. Air heated by the heating element 104 is deliverable by the circulation system 106, 108 into the flow channel(s) 112. At least partly owing to the fluid permeability of the food support 110, heated air in the flow channel(s) 112 may access food supported on the food support 110 from underneath.

Delivery by the circulation system 106, 108 of the air heated by the heating element 104 into the flow channel(s) 112 can be implemented in any suitable manner. In some embodiments, such as shown in FIG. 1, an air duct 113 may be defined between an outlet of the fan 106, from which outlet air is expelled, towards or to inlet(s) of the flow channel(s) 112. Providing/defining such an air duct 113 will be described in more detail herein below.

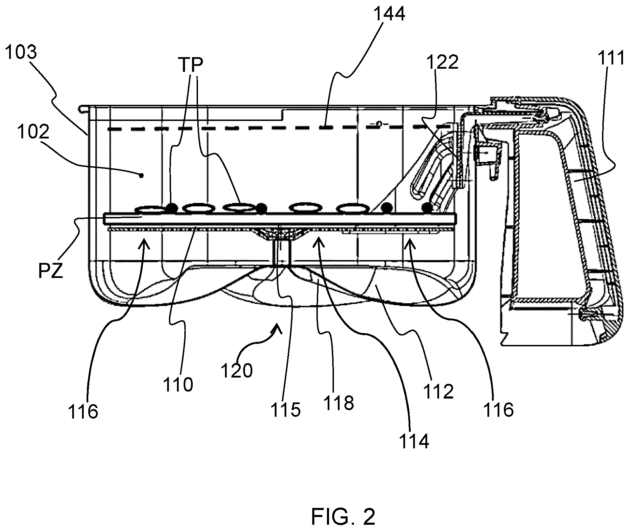

With reference to FIG. 2, heated air in the flow channel(s) 112 being able to access dough-comprising items, such as pizza PZ, from underneath can assist with efficient dough baking.

Moreover, in embodiments in which the heating element 104 is arranged to irradiate food received in the cooking chamber 102, the pizza's PZ toppings TP may be heated from above by being irradiated by the heating element 104, as well as the dough being heated by the heated air delivered thereto via the flow channel(s) 112. This may make for effective and efficient pizza baking.

However, delivery of heated air to the food supported by the food support 110 from underneath can in some cases lead to a compromised baking result. In particular, a central region of dough may be caused to dome/bulge during baking, and holes may even be formed in the central region of the dough. In the worst case, doming of the dough can cause the dough to reach, and therefore be burned by, the heating element 104. This burning can result in excessive smoke production.

Referring to FIGs. 1 to 6, the food support 110 comprises a central portion 114 at a center 115 of the food support 110 and arranged to extend from the center 115 over the, e.g. each of the, one or more flow channels 112 to shield food supported on the central portion 114 from the heated air in the flow channel(s) 112. The food support 110 also comprises a peripheral portion 116 on which food is supportable, with the peripheral portion 116 surrounding the central portion 114.

In order to shield the food supported thereon from the heated air in the flow channel(s) 112, the central portion 114 is impermeable or at least is a relatively low permeability central portion 114, particularly in comparison with the peripheral portion 116.

Thus, the central portion 114 can be regarded as a wind shield. Such a wind shield can, for instance, have a diameter of about 10 cm, and/or may not have any aperture(s).

More generally, the differing permeabilities of the central portion 114 and the peripheral portion 116 can be defined in terms of the peripheral portion 116 having a greater open area than that of the central portion 114, for example with the central portion's 114 open area being 0% to 10%.

The heated air can still reach the dough by passing through the food support 110 primarily or exclusively via the peripheral portion 116 surrounding the central portion 114. Heated air accessing the dough peripherally in this way may nonetheless entail less risk of such doming/bulging of, and hole formation in, the dough.

It is noted that the open area is a ratio known in the art that indicates how much of the area of a plate or sheet is occupied by holes, expressed as a percentage. For example, if the open area of the central portion 114 is 10%, it means that 10% of the central portion 114 is holes and 90% of the central portion 114 is material, e.g. metallic material or silicone.

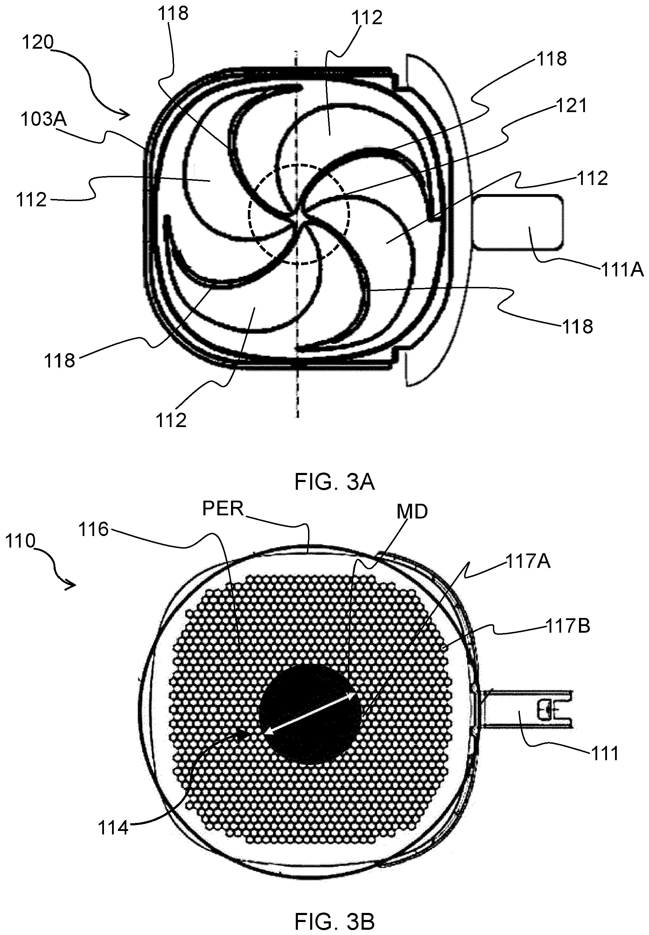

The open area can be measured from an image of the food support 110 in plan, for example as per the views provided in FIGs. 3B, 4B, 5A and 6. Apertures and material of the food support 110 may be distinguished in the image, and an area corresponding to the apertures determined. Dividing the latter by an overall area of the relevant portion 114, 116 of the food support 110 and multiplying by 100 gives the open area of that portion 114, 116.

The center 115 of the food support 110 can be regarded as a centroid, in other words a geometric center, of the food support 110 when viewed as a two-dimensional shape in plan, for example as per the views provided in FIGs. 3B, 4B, 5A and 6.

The central portion 114 extends outwardly from the center 115 to an inner boundary defined between the central portion 114 and the peripheral portion 116. The central portion 114 is accordingly delimited by this inner boundary, with the peripheral portion 116 being defined between the inner boundary and an outer boundary.

The inner boundary between the central portion 114 and the peripheral portion 116 is definable by a notional line that meets innermost apertures 117A of the peripheral portion 116 at a point on a perimeter of each innermost aperture 117A, which point is closest to the center 115 of the food support 110. The notional line defines the shortest distance connecting the points of the innermost apertures 117A, but without passing across innermost apertures 117A, to surround the central portion 114.

The outer boundary around the peripheral portion 116 is definable by a notional envelope line that meets outermost apertures 117B of the peripheral portion 116 at a point on a perimeter of each outermost aperture 117B, which point is furthest from the center 115 of the food support 110. The notional envelope line defines the shortest distance connecting the points of the outermost apertures 117B, but without passing across outermost apertures 117B, to surround the peripheral portion 116.

The outermost apertures 117B of the peripheral portion 116 can be regarded as the apertures of the peripheral portion 116 lying closest to a periphery PER of the food support 110 when viewed in plan, for example as per the views provided in FIGs. 3B, 4B and 5A.

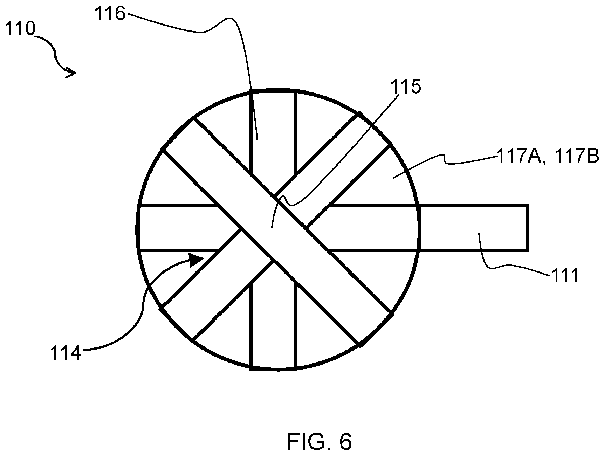

In some embodiments, such as shown in FIG. 6, outermost aperture(s) 117B may be at the periphery PER of the food support 110, in which case the point of the respective perimeter through which the notional envelope line passes is defined on the periphery PER of the food support 110.

In other embodiments, such as shown in FIGs. 3B, 4B and 5A, an apertureless outermost region is provided between the outer boundary of the peripheral portion 116 and the periphery PER of the food support 110.

In some embodiments, such as shown in FIG. 6, only one set of apertures 117A, 117B is provided in the peripheral portion 116. In such embodiments, the innermost apertures 117A are the same as the outermost apertures 117B.

More generally, and referring to FIGs. 4B and 5A, the innermost apertures 117A of the peripheral portion 116 are distinguishable from aperture(s) 117C of the central portion 114 by the innermost apertures 117A of the peripheral portion 116 belonging to a set of apertures whose dimensions and/or spacing from each other causes them to provide greater air permeability than inboard aperture(s) 117C closer to the center 115 of the food support 110.

Aperture(s) 117C provided in the central portion 114, if any, may each have a minimum dimension of 3 mm or less.

In some embodiments, such as shown in FIGs. 5A and 5B, aperture(s) 117C in the central portion 114 each have a maximum dimension of at most 3 mm.

This can avoid or at least assist to minimize the risk of excessive hanging of dough through the central portion 114, and thereby enhance the baking result achievable using the food support 110.

Apertures delimited by the food support 110 may have any suitable form, such as slots, circular/elliptical holes or shape(s) defined between mesh members, e.g. wires, of a mesh.

In a non-limiting example, the peripheral portion 116 comprises, e.g. is defined by, a metal mesh with for example 2 mm distance between fibers/wires of the mesh.

Such a mesh may be highly air permeable.

A dimension of an aperture is measured in a straight line from a first point on a perimeter of the aperture through the aperture's centroid to a second point on the perimeter. The minimum dimension is the smallest of all distances thus measured across the aperture. The maximum dimension is the largest of all distances thus measured across the aperture.

It is noted that the term "centroid" in this context refers to a geometric center of the respective aperture when viewed as a two-dimensional shape in plan.

In embodiments, such as shown in FIG. 4B, in which elongate channel-like aperture(s) 117C is or are provided in the central portion 114, the 3 mm or less minimum dimension may correspond to a width of the channel-like aperture 117C extending generally transverse to its length.

In embodiments, such as shown in FIGs. 5A and 5B, in which the aperture(s) 117C provided in the central portion 114 take the form of hole(s), e.g. circular or elliptical hole(s), the 3 mm or less minimum dimension may correspond to a smallest distance across the respective hole. It is noted that in the case of a circular hole, the minimum dimension and the maximum dimension both correspond to the diameter of the hole.

With continued reference to FIGs. 5A and 5B, should more than one aperture 117C be delimited by the central portion 114, closest edges of nearest neighbor apertures 117C of the central portion 114 may be spaced from each other by at least 3 mm, for example at least 4 mm, e.g. by about 5 mm.

Such spacing may assist to minimize airflow through the central portion 114, and thus assist to alleviate bulging/doming of, and hole formation in, the central region of the dough.

As an alternative or in addition to closest edges of nearest neighbor apertures 117C of the central portion 114 being spaced from each other by at least 3 mm, the spacing between closest edges of nearest neighbor apertures of the peripheral portion 116 may be smaller than the spacing between closest edges of nearest neighbor apertures 117C of the central portion 114. For example, the spacing between closest edges of nearest neighbor apertures of the peripheral portion 116 may be at most 2.5 mm.

This aperture spacing differential between the central portion 114 and the peripheral portion 116 may assist to provide greater permeability in the peripheral portion 116.

In some embodiments, such as shown in FIGs. 3B and 6, the central portion 114 has an open area of 0%. In such embodiments, no aperture is delimited by the central portion 114, e.g. no such aperture is delimited by the metallic material forming the food support 110 in the central portion 114.

Thus, the central portion 114 may block heated air underneath the central portion 114 from passing through the central portion 114 to reach food supported on the central portion 114. Moreover, hanging of dough through the central portion 114 may be alleviated, with concomitant enhancement of the baking result achievable using the air fryer 100.

In some embodiments, such as shown in FIGs. 4B and 5A, the central portion 114 has an open area that is greater than 0% but less than or equal to 10%. In other words, the central portion 114 may be permeable, although airflow therethrough may be minimized due to the open area of the central portion 114 being limited to a maximum of 10%.

In some embodiments, the central portion 114 spans at least 10% of a total area of the food support 110. Such a minimum area for the central portion 114 has been found to be particularly effective in minimizing the risk of doming/bulging of, and hole formation in, the central region of the dough.

In such embodiments, the peripheral portion 116 may span at most 90% of the total area of the food support 110.

Alternatively or additionally, and referring to FIG. 3B, the central portion 114 may have a minimum dimension MD of at least 5 cm, preferably at least 8 cm, such as about 10 cm with the minimum dimension MD extending across the center 115 of the food support 110 from a first point on the inner boundary that delimits the central portion 114 to an opposing second point on the inner boundary.

Such a minimum dimension MD for the central portion 114 has been found to be particularly effective in minimizing the risk of doming/bulging of, and hole formation in, the central region of the dough.

In some embodiments, e.g. in combination with the above-mentioned minimum area and/or minimum dimension MD of the central portion 114, the central portion 114 spans at most 30% of the total area of the food support 110.

The 30% maximum area for the central portion 114 may assist to ensure that sufficient airflow reaches the food, primarily or exclusively via the peripheral portion 116.

In such embodiments, the peripheral portion 116 may span at least 70% of the total area of the food support 110.

In some embodiments, the open area of the peripheral portion 116 is at least 30%. Such a minimum open area of the peripheral portion can facilitate airflow therethrough to reach the food supported on the food support 110.

In some embodiments, such as shown in FIGs. 2, 3A and 4A, the one or more flow channels 112 comprise neighboring flow channels 112 separated from each other by a dividing rib 118. In such embodiments, and referring to FIG. 3B, the central portion 114 may be arranged to extend over the dividing rib 118 and the neighboring flow channels 112.

In this case, the central portion 114 may comprise, e.g. be in the form of, an apertureless plate portion disposed over the flow channels 112 and dividing rib(s) 118.

In some embodiments, the air fryer 100 comprises an air guide member 120 beneath the food support 110 and configured to guide the heated air towards the food support 110, with the one or more flow channels 112 being at least partly defined by the air guide member 120.

With continued reference to FIGs. 2, 3A and 4A, the air guide member 120 may comprise a so-called star-fish shape. The star-fish shape comprises a plurality of radial dividing ribs 118 that separate neighboring flow channels 112 from each other.

Such an air guide member 120 may concentrate airflow in its central area and guide the air upwards.

In several tests, the relatively strong airflow directed to the central region of dough has caused damage, and in particular caused hole formation, in thin undercooked dough. This relatively strong airflow has also been observed to lift dough up and stretch it, in the worst case causing dough to reach, and be burned by, the heating element 104, resulting in heavy smoke leaving the air fryer. This issue can be alleviated by the food support 110 according to the present disclosure, and this alleviation can be enhanced with a sidewall 122, e.g. air guide, upstanding from the food support 110 and guiding heated air beneath the food support 110, as will be described in more detail herein below.

In some embodiments, and as best shown in FIGs. 3A, 3B, 4A and 4B, the central portion 114 is arranged or arrangeable over a central area 121 of the air guide member 120, for example with the central portion 114 spanning at most 30% of the total area of the food support 110.

In this way, the central portion 114 can assist to shield the central region of dough supported on the central portion 114 from relatively forceful airflows directed from the central area 121 of the air guide member 120.

It is noted that the central area of the air guide member 120 may be aligned with an inlet area of the fan 106 included in the circulation system 106, 108 through which inlet area air is axially drawn from the cooking chamber 102 and into the fan 106.

In some embodiments, a single flow channel 112 is provided. In such embodiments, the single flow channel 112 may be defined by a space between the bottom of the cooking chamber 102, e.g. a flat base portion of the cooking chamber wall 103, and an underside of the food support 110.

It is noted that the above-mentioned flat base portion of the cooking chamber wall 103 may mean that no air guide member, e.g. star-fish shaped air guide member, may be provided on the base portion of the cooking chamber wall 103 beneath the food support 110.

In some embodiments, such as shown in FIGs. 1, 2 and 7, a sidewall 122 upstands away from an outer edge of the food support 110.

Such a sidewall 122 may, for example, be included, together with the food support 110, in the air fryer accessory.

In such embodiments, the air duct 113 may be at least partly defined between the sidewall 122 and the cooking chamber wall 103.

Air may be guided in the air duct 113 from the outlet of the fan 106 towards or to the inlet(s) of the flow channel(s) 112, with air being subsequently guided towards the inlet area of the fan 106 located above the food support 110 by the air passing through and/or around the food support 110.

The air duct 113, e.g. channel, may assist to provide a relatively constant airflow beneath the food, e.g. pizza PZ, arranged on the food support 110.

More generally, the cooking chamber 102 and the circulation system 106, 108 may be arranged such that, when the air fryer 100 is orientated for use, at least part of the heated air traverses a height of the cooking chamber 102.

The traversing of the height of the cooking chamber 102 may mean that the at least part of the heated air passes upwardly and/or downwardly through the cooking chamber 102.

In other words, this traversing of the height of the cooking chamber 102 may mean upward and/or downward heated airflow through the food received in the cooking chamber 102. This may assist to provide the frying effect provided by the air fryer 100.

It is noted that such upward and/or downward heated airflow through the cooking chamber 102 may not require the sidewall 122 and the duct 113 defined between the sidewall 122 and the cooking chamber wall 103. Thus, in some embodiments the sidewall 122 and the duct 113 may be omitted.

For example, a food support 110 without a sidewall 122 may be arranged or arrangeable inside the cooking chamber 102 for supporting food thereon. In such embodiments, mass heated air circulation within the cooking chamber 102 may be provided, with both upward and downward airflow directions through the cooking chamber 102 being possible.

In embodiments in which the sidewall 122 is included, the sidewall 122 may extend around only a fraction of an outer edge of the food support 110. This can assist to provide a controlled, e.g. uniform, heated airflow to the food supported on the food support 110, with concomitant enhancement of the cooking/baking result.

By arranging the sidewall 122, which can be regarded as an air guide, on one side of the food support 110, a part of the heated air coming from the circulation system 106, 108 may be guided by the sidewall 122 below the food, e.g. pizza PZ. Heat energy may thus be transferred to the cooler bottom of the food, e.g. pizza PZ.

The sidewall 122, e.g. air guide, may assist to prevent the heated air, coming directly from the circulation system 106, 108 from reverting directly back to the inlet area, in other words low pressure suction area, in the center of the fan 106.

Once the heated air is guided beneath the food, e.g. pizza PZ, the air may revert to the inlet area via the remainder of the outer edge along which the sidewall 122 does not extend, e.g. by passing around part of the outer edge that opposes the sidewall 122.

There may be no gaps that allow heated air in the air duct 113 to escape therefrom prior to the air reaching the inlet(s) of the flow channel(s) 112 that extend beneath the food support 110. In this way, heated air in the air duct 113 may be forced to pass beneath the food support 110. It is reiterated that the air duct 113 may assist to provide a relatively constant airflow beneath the food, e.g. pizza PZ, arranged on the food support 110.

Temperature measurements showed a significant increase in temperature, of about 30%, below a pizza PZ being baked with a gapless sidewall 122 upstanding directly from the food support 110 compared to a conventional accessory in which a gap is defined in the sidewall 122 above the food support 110.

In these experiments, dough was cooked to an adequate doneness, with some browning even being visible, in the case of the gapless sidewall 122 upstanding directly from the food support 110, whereas dough was mostly raw underneath with the conventional accessory. The level of browning on the upper side of the pizza PZ was observed to be the same in both cases.

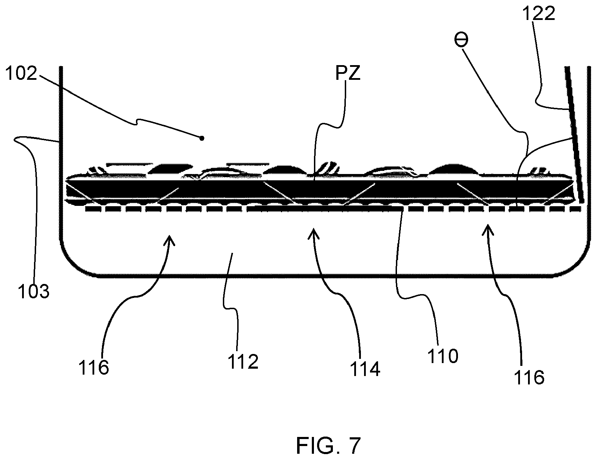

In some embodiments, such as shown in FIG. 7, the sidewall 122 upstands away from the outer edge of the food support 110 at an angle θ such that the sidewall 122 extends inwardly towards the central portion 114 of the food support 110. Such angling of the sidewall 122 can further assist to control heated airflow to the food supported on the food support 110.

In some embodiments, a pair of discrete sidewall portions may each upstand away from the food support 110 and face each other across the food support 110.

Such discrete sidewall portions may guide heated air underneath the food support 110 via opposing edges of the food support 110 from which the sidewall portions upstand.

In such embodiments, a handle element, e.g. hand grip, may be provided for assisting lifting of the food support 110, with the handle element forming a bridge that extends over the food support 110 from one of the discrete sidewall portions to the other of the discrete sidewall portions.

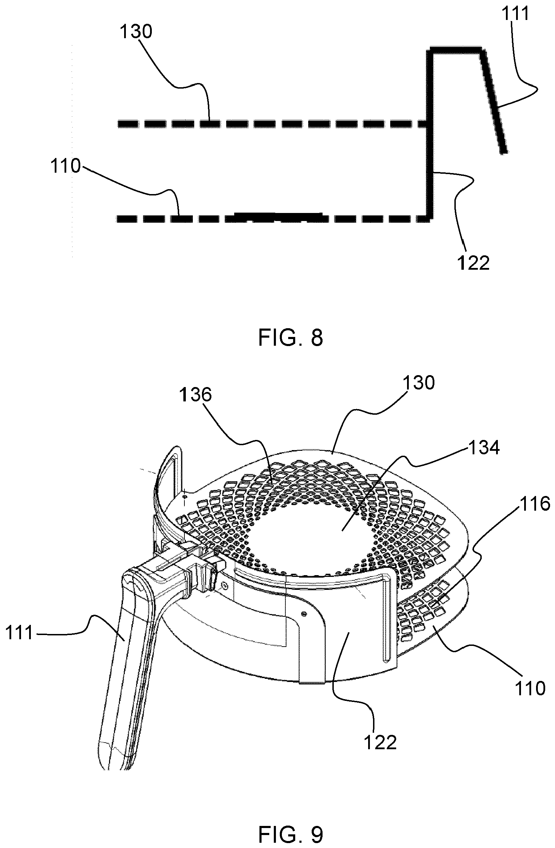

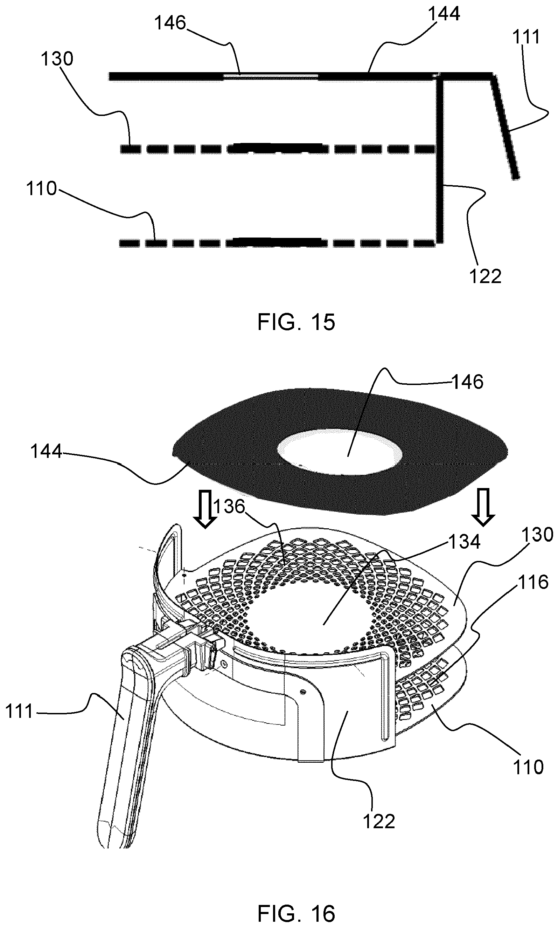

In some embodiments, such as shown in FIGs. 8 to 16, a further food support 130 is provided for supporting food thereon in the cooking chamber 102, with the further food support 130 being arranged or arrangeable above the food support 110 in the cooking chamber 102. This may facilitate cooking, e.g. baking, of more food in the cooking chamber 102, in other words in one go.

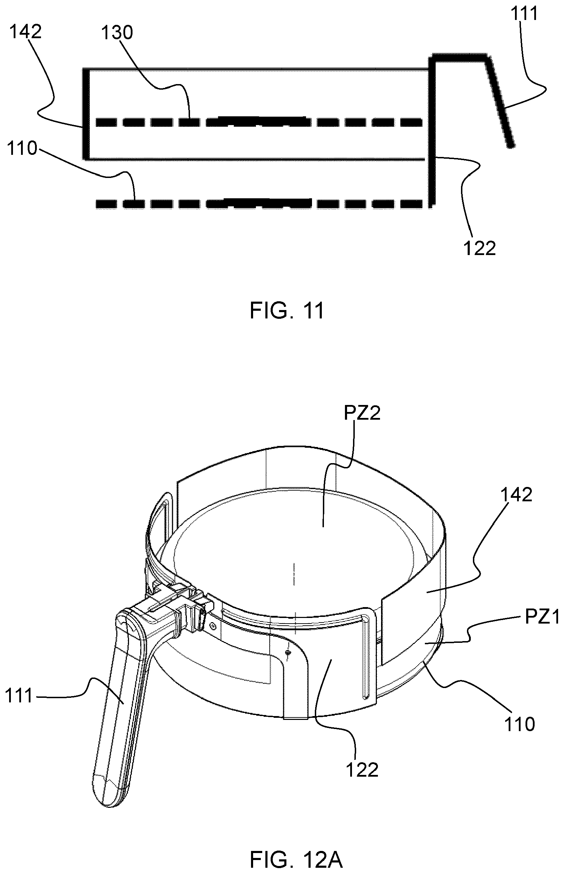

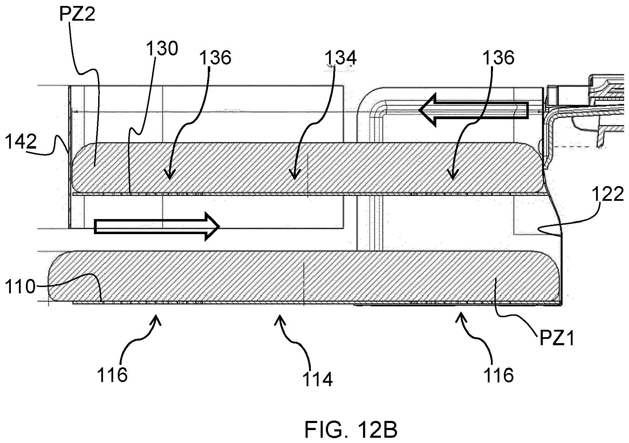

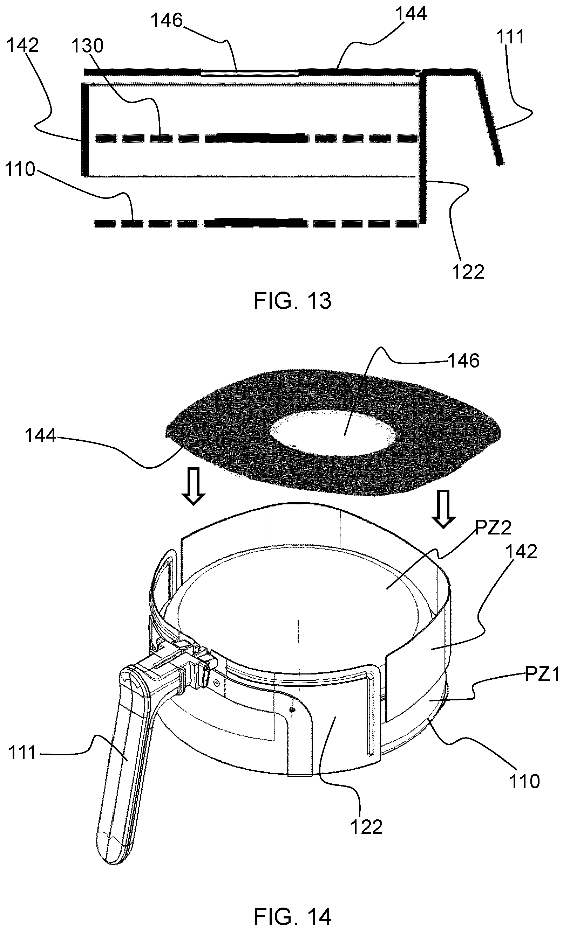

For illustration, FIGs. 12A, 12B and 14 show a first pizza PZ1 supported on the food support 110, and a second pizza PZ2 supported on the further food support 130. A maximum diameter of the pizzas PZ, PZ1, PZ2 may be limited by the size of the cooking chamber 102, e.g. pan. For example, the maximum diameter of the pizzas PZ, PZ1, PZ2 may be about 26 cm.

It is noted, for the avoidance of doubt, that the further food support 130, in common with the food support 110, can support various different types of food, such as fruit (for drying in the air fryer 100), fish, and so on.

It is noted that the further food support 130 may be included, together with the food support 110 according to any of the embodiments described herein, in the air fryer accessory.

In some embodiments, the further food support 130 is removably fixed to the air fryer accessory.

The further food support 130 can be formed of any suitable material. In some embodiments, the further food support 130 comprises a metallic material, in other words a metal or a metal alloy. Such a metallic material is preferably coated with a non-stick coating, such as a fluoropolymer coating. In other embodiments, the further food support 130 comprises, e.g. is formed from, a heat resistant polymer, such as silicone.

In some embodiments, the further food support 130 comprises a further central portion 134 arranged to shield food supported on the further central portion 134 from heated air between the food support 110 and the further food support 130, and a further peripheral portion 136 on which food is supportable, with the further peripheral portion 136 surrounding the further central portion 134 and having a larger open area than that of the further central portion 134.

Similarly to the design of the food support 110, the further central portion 134 can assist to minimize the risk of upwards doming/bulging of, and hole formation in, a central region of dough supported on the further food support 130. The heated air can still reach the dough via the further peripheral portion 136 surrounding the further central portion 134 but with less risk of doming/bulging of, and hole formation in, the dough.

The further central portion 134 extends outwardly from a center of the further food support 130 to a further inner boundary defined between the further central portion 134 and the further peripheral portion 136. The further central portion 134 is accordingly delimited by this further inner boundary, with the further peripheral portion 136 being defined between the further inner boundary and a further outer boundary.

The further inner boundary between the further central portion 134 and the further peripheral portion 136 is definable by a notional line that meets innermost apertures of the further peripheral portion 136 at a point on a perimeter of each innermost aperture, which point is closest to the center of the further food support 130. The notional line defines the shortest distance connecting the points of the innermost apertures, but without passing across innermost apertures, to surround the further central portion 134.

The further outer boundary around the further peripheral portion 136 is definable by a notional envelope line that meets outermost apertures of the further peripheral portion 136 at a point on a perimeter of each outermost aperture, which point is furthest from the center of the further food support 130. The notional envelope line defines the shortest distance connecting the points of the outermost apertures, but without passing across outermost apertures, to surround the further peripheral portion 136.

The outermost apertures of the further peripheral portion 136 can be regarded as the apertures of the further peripheral portion 136 lying closest to a periphery of the further food support 130 when viewed in plan. In some embodiments, outermost aperture(s) may be at the periphery of the further food support 130, in which case the point of the respective perimeter through which the notional envelope line passes is defined on the periphery of the further food support 130.

The innermost apertures of the further peripheral portion 136 are distinguishable from aperture(s), if any, of the further central portion 134 by the innermost apertures of the further peripheral portion 136 belonging to a set of apertures whose dimensions and/or spacing from each other causes them to provide greater air permeability than inboard aperture(s) closer to the center of the further food support 130.

Aperture(s) provided in the further central portion 134, if any, may each have a minimum dimension of 3 mm or less.

In some embodiments, aperture(s) in the further central portion 134 each have a maximum dimension of at most 3 mm.

This can avoid or at least assist to minimize the risk of excessive hanging of dough through the further central portion 134, and thereby enhance the baking result.

Apertures delimited by the further food support 130 may have any suitable form, such as slots, circular/elliptic holes or shape(s) defined between mesh members, e.g. wires, of a mesh.

In a non-limiting example, the further peripheral portion 136 comprises, e.g. is defined by, a metal mesh with for example 2 mm distance between fibers/wires of the mesh.

Such a mesh may be highly air permeable.

An open area of the further central portion 134 may be 0 to 10%. This may assist to minimize airflow through the further central portion 134.

In some embodiments, the further central portion 134 has an open area of 0%. In other words, the further central portion 134 may be impermeable so as to block heated air underneath the further central portion 134 from passing through the further central portion 134 to reach food supported on the further central portion 134.

Alternatively, the further central portion 134 may have an open area that is greater than 0% but less than or equal to 10%. In other words, the further central portion 134 may be permeable, although airflow therethrough may be minimized due to the open area of the further central portion 134 being limited to a maximum of 10%.

Should more than one aperture be delimited by the further central portion 134, closest edges of nearest neighbor apertures of the further central portion 134 may be spaced from each other by at least 3 mm, for example at least 4 mm, e.g. by about 5 mm.

Such spacing may assist to minimize airflow through the further central portion 134, and thus assist to alleviate bulging/doming of, and hole formation in, the central region of the dough.

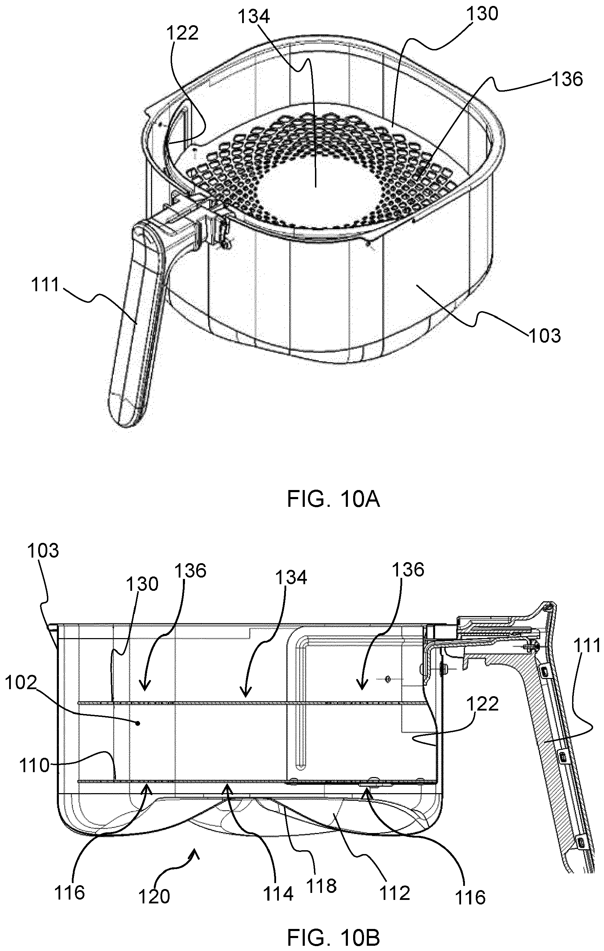

In some embodiments, such as shown in FIGs. 10A to 16, the central portion 114 of the food support 110 and the further central portion 134 of the further food support 130 are aligned with each other so that the further central portion 134 extends over, e.g. eclipses, the central portion 114.

In some embodiments, such as shown in FIGs. 11, 12A, 12B, 13 and 14, a further sidewall 142 upstands away from a further outer edge of the further food support 130.

Such a further sidewall 142 may, for example, be included, together with the further food support 130 and the food support 110, in the air fryer accessory.

In some embodiments, the further sidewall 142 extends around only a fraction of the further outer edge of the further food support 130. The further sidewall 142 can assist to provide a controlled, e.g. uniform, heated airflow to the food supported on the further food support 130, with concomitant enhancement of the cooking/baking result.

In embodiments in which the sidewall 122 and the further sidewall 142 are included, the fraction of the outer edge along which the sidewall 122 extends may align with a remainder of the further outer edge along which the further sidewall 142 does not extend. Alternatively or additionally, opposing regions of the sidewall 122 and the further sidewall 142 may face each other across the further food support 130.

In this way, and referring to FIGs. 11, 12A, 12B, 13 and 14, both the sidewall 122 and the further sidewall 142 can cooperate with each other to control the heated airflow through the cooking chamber 102.

In some embodiments, and as best shown in FIG. 12B, the sidewall 122 and the further sidewall 142 can be mutually arranged such that heated air is guided across the food support 110 in a first direction towards the sidewall 122 and then across the further food support 130 in a second direction, e.g. opposite to the first direction, towards the further sidewall 142.

The further sidewall 142, in other words, second air guide can assist to provide more even browning of food supported on the food support 110 and the further food support 130.

The further sidewall 142 may be a part that is separate from the further food support 130, and may for assembly reasons be arranged in the cooking chamber 102, e.g. pan, after loading the cooking chamber 102 with the air fryer accessory comprising the food support 110, the further food support 130 and the food, e.g. pizzas PZ1, PZ2, loaded onto the food support 110 and the further food support 130.

The further sidewall 142 may provide an alternative to, for instance, baking two pizzas PZ1, PZ2 for ten minutes, following by removing the pizza PZ2 supported by the further food support 130 from the air fryer 100 prior to baking the pizza PZ1 supported by the food support 110 for 3 further minutes, or swapping the pizza PZ1 initially supported on the food support 110 to the further food support 130 and swapping the pizza PZ2 initially supported on the further food support 130 to the food support 110 after five minutes' baking.

In testing it was found that the further sidewall 142 enabled both pizzas PZ1, PZ2 to be baked in ten minutes at 200°C using the upper airspeed of a Philips air fryer 100, without the above-mentioned swapping between the food support 110 and the further food support 130, with acceptable and relatively even browning of both pizzas PZ1, PZ2.

It is noted that a maximum diameter of the pizza PZ2 supported by the further food support 130 may be smaller, e.g. about 24 cm, than a maximum diameter of the pizza PZ1 supported by the food support 110, due to the inclusion of the further sidewall 142.

In some embodiments, such as shown in FIGs. 2 and 13 to 16, a cover member 144 is arranged or arrangeable between the heating element 104 and the food support 110, with one or more flow paths 146 being provided for the heated air through and/or past the cover member 144. The cover member 144 can assist to lessen the risk of food being blown by the airflow against the heating element 104. In some embodiments, the cover member 144 can comprise, e.g. be in the form of a perforate cover, such as a mesh.

In some embodiments, such as shown in FIGs. 13 to 16, the cover member 144 is arranged or arrangeable between the heating element 104 and the food support 110 such that radiation from the heating element 104 is incident on a heat shielding portion of the cover member 144. In such embodiments, food supported by the food support 110 and/or the further food support 130 (when present) may be shielded from radiation from the heating element 104.

This can assist to minimize the risk of burning of food and attain a more homogeneous cooking result. This may be particularly beneficial in embodiments in which the further food support 130 is included, since the further food support 130 may be arranged or arrangeable closer to the heating element 104, proximal to a top of the cooking chamber 102, than the food support 110.

In particularly preferred embodiments, the cover member 144 comprises the heat shielding portion and this heat shielding portion delimits a central opening that defines a flow path 146 directed toward the inlet area of the fan 106.

Such a central opening delimited by the heat shielding portion may align with the inlet area of the fan 106 when the food support 110, the cover member 144, and optionally the further food support 130, are received in the cooking chamber 102.

Superior cooking/baking results were observed in such embodiments, particularly those that include the further food support 130.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. An air fryer (100) comprising:
a cooking chamber (102);
a heating element (104);
a circulation system (106, 108) for circulating air heated by the heating element in the cooking chamber;
a fluid permeable food support (110) for supporting food thereon in the cooking chamber; and
one or more flow channels (112) extending beneath the food support and into which air heated by the heating element is deliverable by the circulation system, wherein the food support comprises:
a central portion (114) at a center of the food support and arranged to extend from the center over the one or more flow channels to shield food supported on the central portion from the heated air in the one or more flow channels; and
a peripheral portion (116) on which food is supportable, the peripheral portion surrounding the central portion and having a larger open area than that of the central portion.

2. The air fryer (100) according to claim 1, wherein the central portion (114) spans at least 10% of a total area of the food support (110).

3. The air fryer (100) according to claim 1 or claim 2, wherein the open area of the peripheral portion (116) is at least 30%.

4. The air fryer (100) according to any one of claims 1 to 3, wherein the central portion (114) has an open area of 0%.

5. The air fryer (100) according to any one of claims 1 to 3, wherein the central portion (114) has an open area that is greater than 0% but less than or equal to 10%.

6. The air fryer (100) according to any one of claims 1 to 5, wherein the one or more flow channels (112) comprise neighboring flow channels separated from each other by a dividing rib (118), wherein the central portion (114) is arranged to extend over the dividing rib and the flow channels.

7. The air fryer (100) according to any one of claims 1 to 6, comprising an air guide member (120) beneath the food support (110) and configured to guide the heated air towards the food support (110), the one or more flow channels (112) being at least partly defined by the air guide member.

8. The air fryer (100) according to claim 7, wherein the central portion (114) is disposed over a central area of the air guide member (120), and the central portion spans at most 30% of a total area of the food support.

9. The air fryer (100) according to any one of claims 1 to 8, comprising a sidewall (122) upstanding away from and extending around only a fraction of an outer edge of the food support (110).

10. The air fryer (100) according to claim 9, wherein the sidewall (122) upstands away from the outer edge of the food support (110) at an angle (θ) such that the sidewall extends inwardly towards the central portion (114) of the food support.

11. The air fryer (100) according to any one of claims 1 to 10, comprising a further food support (130) for supporting food thereon in the cooking chamber (102), the further food support being arranged or arrangeable above the food support (110) in the cooking chamber.

12. The air fryer (100) according to claim 11, wherein the further food support (130) comprises:
a further central portion (134) arranged to shield food supported on the further central portion from heated air between the food support (110) and the further food support; and
a further peripheral portion (136) on which food is supportable, the further peripheral portion surrounding the further central portion and having a larger open area than that of the further central portion.

13. The air fryer (100) according to claim 12, comprising a further sidewall (142) upstanding away from and extending around only a fraction of a further outer edge of the further food support (130).

14. The air fryer (100) according to claim 13 as according to claim 9 or claim 10, wherein the fraction of the outer edge along which the sidewall (122) extends aligns with a remainder of the further outer edge along which the further sidewall (142) does not extend; and/or wherein opposing regions of the sidewall and the further sidewall face each other across the further food support (130).

15. The air fryer (100) according to any one of claims 1 to 14, comprising a cover member (144) arranged or arrangeable between the heating element (104) and the food support (110), one or more flow paths (146) being provided for the heated air through and/or past the cover member; optionally wherein radiation from the heating element (104) is incident on a heat shielding portion of the cover member.
